# EUROPEAN PATENT APPLICATION

(11) **EP 3 544 303 A1**
(43) Date of publication of application: **25.09.2019**
(21) Application number: 17871436.6
(22) Date of filing: 15.11.2017
(51) Int. Cl.: H04N 21/234, H04N 21/44, H04L 29/08, H04L 29/06, G06F 3/14

(54) **METHOD, DEVICE, AND SYSTEM FOR PROCESSING VIDEO FILE**

(30) Priority: 15.11.2016 CN 201611005666
(71) Applicant: ZTE Corporation, Shenzhen, Guangdong 518057 (CN)
(72) Inventor: XIAO, Zihui, Shenzhen Guangdong 518057 (CN); GUO, Resi, Shenzhen Guangdong 518057 (CN)
(74) Representative: Aipex B.V.
(86) International application number: PCT/CN2017/111003
(87) International publication number: WO 2018/090918

(57) **Abstract**

The embodiments of the present invention disclose a method, device and system for processing a video file. The method may include: intercepting a video file stream to be played; separating, according to a data type, the video file stream to obtain a data stream; and transmitting the data stream through a channel corresponding to the data stream.

## Description

### TECHNICAL FIELD

The present invention relates to video playing technologies and, in particular, to a method, device and system for processing a video file.

### BACKGROUND

In recent years, with the development of the cloud computing technology, traditional personal computers (PCs) are gradually replaced with cloud desktops. In a cloud computing system, one of the most important functions is to play videos on the cloud desktop. The current mainstream virtual desktop protocols include Independent Computing Architecture (ICA) of Citrix, PC-over-IP (PCoIP) of VMware, Remote Desktop Protocol (RDP) of Microsoft, and Simple Protocol for Independent Computing Environment (SPICE) of Red Hat. Currently, the cloud desktop which supports video playing better is mainly the cloud desktop of Citrix, but the cloud desktop of Citrix is not adaptable to all processors. Generally, when a user plays a video on other types of cloud desktops, the video cannot be played smoothly, and even the cloud desktops abort.

### SUMMARY

To solve the preceding problem, the embodiments of the present invention provides a universal method, device and system for processing a video file, to be adaptable to different cloud desktop protocols and operating systems for video play.

The technical solutions of the present invention are implemented as follows:
In a first aspect, an embodiment of the present invention provides a method for processing a video file. The method is applied to a cloud desktop server and includes steps described below.

A video file stream to be played is intercepted.

The video file stream is separated according to a data type to obtain a data stream.

The data stream is transmitted through a channel corresponding to the data stream.

In the preceding solution, the step of intercepting the video file stream to be played specifically includes a step described below.

When a play instruction is acquired, the video file to be played is intercepted according to the play instruction.

In the preceding solution, the step of separating, according to the data type, the video file stream to obtain the data stream specifically includes steps described below.

A player is constructed.

The video file stream is separated into an audio stream, a video stream and a subtitle stream through the player.

In the preceding solution, the step of transmitting the data stream through the channel corresponding to the data stream specifically includes steps described below.

A transmission channel corresponding to the audio stream, a transmission channel corresponding to the video stream and a transmission channel corresponding to the subtitle stream are established. An identifier of the transmission channel corresponding to the audio stream, an identifier of the transmission channel corresponding to the video stream and an identifier of the transmission channel corresponding to the subtitle stream are transmitted.

The audio stream is transmitted through the transmission channel corresponding to the audio stream, the video stream is transmitted through the transmission channel corresponding to the video stream and the subtitle stream is transmitted through the transmission channel corresponding to the subtitle stream.

In the preceding solution, the method further includes a step described below.

Play indication information is transmitted, where the play indication information is used for indicating a position and a size of a video play window.

In the preceding solution, before the video file stream to be played is intercepted, the method further includes a step described below.

A video decoding capability of a cloud terminal is acquired.

In a second aspect, an embodiment of the present invention provides a method for processing a video file. The method is applied to a cloud terminal and includes steps described below.

A transmission channel corresponding to a data stream is established.

The data stream is received through the transmission channel.

The data stream is decoded and played.

In the preceding solution, the method further includes steps described below.

Play indication information is received.

A play window is established according to the play indication information.

In the preceding solution, the data stream includes an audio stream, a video stream and a subtitle stream.

Accordingly, the step of establishing the transmission channel corresponding to the data stream specifically includes a step described below.

A transmission channel for transmitting the audio stream, a transmission channel for transmitting the video stream and a transmission channel for transmitting the subtitle stream are established. In the preceding solution, before the transmission channel corresponding to the data stream is established, the method further includes steps described below.

A connection is established with a cloud desktop server and a video decoding capability of the cloud terminal is reported to the cloud desktop server.

A main window of a current interface of the cloud desktop server is acquired.

In a third aspect, an embodiment of the present invention provides a cloud desktop server. The cloud desktop server includes a first communication interface, a first memory, a first processor and a first bus.

The first bus is configured to connect the first communication interface, the first processor and the first memory for communication among the first communication interface, the first processor and the first memory.

The first communication interface is configured to perform data transmission with an external network element.

The first memory is configured to store instructions and data.

The first processor is configured to execute the instructions to intercept a video file stream to be played; separate, according to a data type, the video file stream to obtain a data stream; and transmit the data stream through a channel corresponding to the data stream.

In the preceding solution, the first processor is configured to execute the instructions to intercept the video file to be played according to a play instruction when the play instruction is acquired. In the preceding solution, the first processor is configured to execute the instructions to construct a player; and separate the video file stream into an audio stream, a video stream and a subtitle stream through the player.

In the preceding solution, the first communication interface is configured to establish a transmission channel corresponding to the audio stream, a transmission channel corresponding to the video stream and a transmission channel corresponding to the subtitle stream; transmit an identifier of the transmission channel corresponding to the audio stream, an identifier of the transmission channel corresponding to the video stream and an identifier of the transmission channel corresponding to the subtitle stream; and transmit the audio stream through the transmission channel corresponding to the audio stream, the video stream through the transmission channel corresponding to the video stream and the subtitle stream through the transmission channel corresponding to the subtitle stream.

In the preceding solution, the first communication interface is further configured to transmit play indication information, where the play indication information is used for indicating a position and a size of a video play window.

In the preceding solution, the first communication interface is further configured to acquire a video decoding capability of a cloud terminal.

In a fourth aspect, an embodiment of the present invention provides a cloud terminal. The cloud terminal includes a second communication interface, a second memory, a second processor, a display unit and a second bus.

The second bus is configured to connect the second communication interface, the second processor, the display unit and the second memory for communication among the second communication interface, the second processor, the display unit and the second memory.

The second communication interface is configured to perform data transmission with an external network element.

The second memory is configured to store instructions and data.

The second processor is configured to execute the instructions to establish a transmission channel corresponding to a data stream; receive the data stream through the transmission channel; and decode the data stream and instruct a second display unit to play the data stream.

In the preceding solution, the second communication interface is configured to receive play indication information; and the second processor is configured to execute the instructions to establish a play window according to the play indication information.

In the preceding solution, the data stream includes an audio stream, a video stream and a subtitle stream.

Accordingly, the second processor is configured to execute the instructions to establish a transmission channel for transmitting the audio stream, a transmission channel for transmitting the video stream and a transmission channel for transmitting the subtitle stream.

In the preceding solution, the second communication interface is further configured to establish a connection with a cloud desktop server and report a video decoding capability of the cloud terminal to the cloud desktop server; and acquire a main window of a current interface of the cloud desktop server.

In a fifth aspect, an embodiment of the present invention provides a system for processing a video file. The system includes a cloud desktop server and a cloud terminal.

The cloud desktop server is configured to intercept a video file stream to be played; separate, according to a data type, the video file stream to obtain a data stream; and transmit the data stream through a channel corresponding to the data stream.

The cloud terminal is configured to establish a transmission channel corresponding to the data stream; receive the data stream through the transmission channel; and decode and play the data stream.

Another embodiment of the present invention further provides a storage medium, including stored programs which, when executed, execute the method according to any one of the embodiments described above.

Another embodiment of the present invention further provides a processor, which is configured to execute programs which, when executed, execute the method according to any one of the embodiments described above.

The embodiments of the present invention provide the method, device and system for processing a video file in which a cloud desktop separates the video file into different data streams and transmits the different data streams to a terminal, and the terminal performs local video decoding, thereby reducing an operating pressure of a server and traffic between the terminal and the server, and being adaptable to different cloud desktop protocols for video play.

### BRIEF DESCRIPTION OF DRAWINGS

FIG. 1 is a flowchart of a method for processing a video file according to an embodiment of the present invention;
FIG. 2 is a flowchart of another method for processing a video file according to an embodiment of the present invention;
FIG. 3 is a flowchart illustrating a specific implementation of video play of a cloud terminal according to an embodiment of the present invention;
FIG. 4 is a detailed flowchart of a method for processing a video file according to an embodiment of the present invention;
FIG. 5 is a structural diagram of a cloud desktop system according to an embodiment of the present invention;
FIG. 6 is a structural diagram of a cloud desktop server according to an embodiment of the present invention;
FIG. 7 is a structural diagram of another cloud desktop server according to an embodiment of the present invention;
FIG. 8 is a schematic diagram illustrating an operating principle of a cloud desktop server according to an embodiment of the present invention;
FIG. 9 is a structural diagram of a cloud terminal according to an embodiment of the present invention;
FIG. 10 is a structural diagram of another cloud terminal according to an embodiment of the present invention;
FIG. 11 is a schematic diagram of a physical structure of a cloud desktop server according to an embodiment of the present invention;
FIG. 12 is a schematic diagram of a physical structure of a cloud terminal according to an embodiment of the present invention; and
FIG. 13 is a structural diagram of a system for processing a video file according to an embodiment of the present invention.

### DETAILED DESCRIPTION

The technical solutions in the embodiments of the present invention are clearly and completely described below in conjunction with the drawings in the embodiments of the present invention.

### Embodiment 1

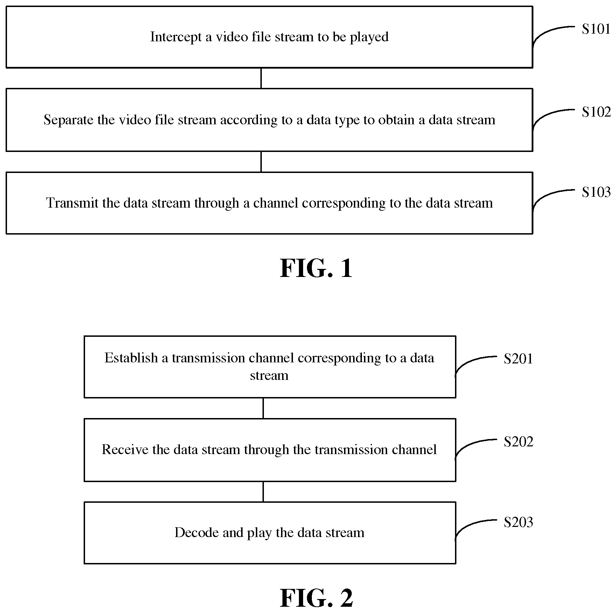

FIG. 1 shows a method for processing a video file according to an embodiment of the present invention. The method may be applied to a cloud desktop server and include steps described below. In S101, a video file stream to be played is intercepted.

In S102, the video file stream is separated according to a data type to obtain a data stream.

In S103, the data stream is transmitted through a channel corresponding to the data stream.

It is to be noted that in the technical solution shown in FIG. 1, after the video file stream is intercepted by the cloud desktop server, the cloud desktop server separates the video file stream according to the data type into the data stream and transmit the data stream to a cloud terminal, instead of decoding the video file stream so that the cloud terminal decodes and plays the data stream according to a local hardware decoding capability, reducing an operating pressure of the cloud desktop server and traffic between the cloud terminal and the cloud desktop server, and being adaptable to different cloud desktop protocols for video play.

Exemplarily, the step in which the video file stream to be played is intercepted specifically includes a step described below.

When a play instruction is acquired, the video file to be played is intercepted according to the play instruction.

It is to be noted that in a specific implementation of this example, a Windows system is taken as an example. A system hook may be set in the cloud desktop server through a system plug-in, and when the cloud desktop server receives an instruction for video play from a user, the system hook is triggered and the video file to be played is intercepted. Here, the system hook is a very important system interface which may monitor various event messages in a system or process, and intercept and process a message transmitted to a target window. Every time a particular message is transmitted, the system hook may capture the particular message before the particular message reaches a destination address, that is, a hook function first gains the right of control. At this time, the system hook may either process or change the particular message, or may continue to transmit the particular message without processing the particular message, or may forcibly terminate transmission of the particular message. In short, the system hook may monitor messages transmitted by all processes, intercept the messages, and perform subsequent processing. Taking an Android system based on a Linux open source system as an example, an existing function interface may be replaced with a dynamic link library complied in advance by use of a pstrace mechanism to begin a processing process of the video file and further intercept the video file to be played.

Exemplarily, the step in which the video file stream to obtain the data stream is separated according to the data type specifically includes steps described below.

A player is constructed.

The video file stream is separated into an audio stream, a video stream and a subtitle stream through the player.

Accordingly, optionally, the step in which the data stream is transmitted through the channel corresponding to the data stream specifically includes steps described below.

A transmission channel corresponding to the audio stream, a transmission channel corresponding to the video stream and a transmission channel corresponding to the subtitle stream are established. An identifier of the transmission channel corresponding to the audio stream, an identifier of the transmission channel corresponding to the video stream and an identifier of the transmission channel corresponding to the subtitle stream are transmitted.

The audio stream is transmitted through the transmission channel corresponding to the audio stream, the video stream is transmitted through the transmission channel corresponding to the video stream and the subtitle stream is transmitted through the transmission channel corresponding to the subtitle stream.

As for the preceding examples, it is to be noted that after the video file to be played is intercepted, a simple player may be constructed. The simple player is mainly used for separating and transmitting the video file stream. For example, on a Windows platform, the player may be constructed through a DirectShow framework. The player mainly includes a separator and a renderer. The renderer transmits a separated video stream instead of performing a real display. On an Android platform or an IOS platform, the player may be constructed through a GStreamer framework. The player mainly includes a separator and a renderer. The renderer is a modified GStreamer component mainly used for transmitting the separated video stream.

As to the separation, the video file stream generally includes an audio stream and a video stream, and may further include a subtitle stream for a video file in non-native language. Therefore, the constructed player may separate the video file streams into the audio stream, the video stream and the subtitle stream. After the video file stream is separated, the constructed player may transmit the audio stream, the video stream and the subtitle stream obtained from the separation to the cloud terminal as required. In a specific implementation, the cloud desktop server and the cloud terminal establish respective transmission control protocol (TCP) channels for the audio stream, the video stream and the subtitle stream obtained from the separation; the cloud desktop server notifies the cloud terminal of identifiers such as port numbers of the TCP channels. Therefore, the cloud desktop server may transmit the audio stream, the video stream and the subtitle stream through the established TCP channels; and the cloud terminal may also receive the audio stream, the video stream and the subtitle stream through the corresponding TCP channels according to the identifiers such as the port numbers of the TCP channels.

It is understandable that the data stream transmitted through the TCP channels is only separated data, that is, data before video decoding. The separated data has less data amount than a video display picture, thereby reducing traffic required for data transmission between the cloud terminal and the cloud desktop server.

Exemplarily, the cloud desktop server may also transmit play indication information to the cloud terminal while transmitting the data stream. The play indication information is used for indicating a play parameter such as a position and a size of a video play window when the cloud terminal performs video play. Therefore, after receiving a play instruction, the cloud terminal may perform the video play in the video play window with the corresponding position and size on a current local main window according to the play parameter. It is understandable that the cloud desktop server may transmit the play indication information along with each video frame of the video stream to control in real time the play parameter of the cloud terminal during the video play. Exemplarily, before the preceding technical solution is implemented, further included is a preprocessing process after the cloud terminal logs in to the cloud desktop server. The process may include acquisition of a video decoding capability of a cloud terminal. Optionally, after the cloud terminal logs in to the cloud desktop server, the cloud terminal starts a client corresponding to the cloud desktop server in the cloud terminal and establishes a TCP connection with the cloud desktop server through the client so that the cloud terminal may report its own video decoding capability through the TCP connection.

This embodiment provides the method for processing a video file applied to the cloud desktop server. In the method, the cloud desktop server separates the video file stream according to the data type and transmit the data stream to the cloud terminal after intercepting the video file stream instead of decoding the video file stream so that the cloud terminal decodes and plays the data stream according to the local hardware decoding capability, reducing the operating pressure of the cloud desktop server and the traffic between the cloud terminal and the cloud desktop server, and being adaptable to different cloud desktop protocols for the video play.

### Embodiment 2

Based on the same technical concept as the preceding embodiment, FIG. 2 shows a method for processing a video file according to an embodiment of the present invention. The method is applied to a cloud terminal and may include steps described below.

In S201, a transmission channel corresponding to a data stream is established.

In S202, the data stream is received through the transmission channel.

In S203, the data stream is decoded and played.

It is to be noted that the data stream may include an audio stream, a video stream, and a subtitle stream. Therefore, accordingly, establishing the transmission channel corresponding to the data stream specifically includes a step described below.

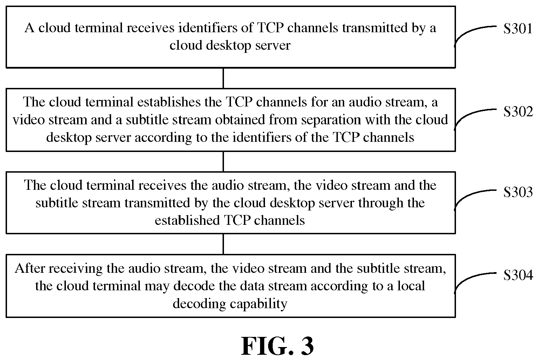

A transmission channel for transmitting the audio stream, a transmission channel for transmitting the video stream and a transmission channel for transmitting the subtitle stream are established. It is to be noted that referring to FIG. 3, a specific implementation of the preceding solution may include steps described below.

In S301, the cloud terminal receives identifiers such as port numbers of TCP channels transmitted by a cloud desktop server.

In S302, the cloud terminal establishes respective TCP channels for the audio stream, the video stream and the subtitle stream obtained from the separation with the cloud desktop server according to the identifiers of the TCP channels.

In S303, the cloud terminal receives the audio stream, the video stream and the subtitle stream transmitted by the cloud desktop server through the established TCP channels.

It is understandable that the audio stream, the video stream and the subtitle stream received by the cloud terminal are separated from the video file stream instead of being decoded. Therefore, the data stream has less data amount than a video display picture, thereby reducing traffic required for data transmission between the cloud terminal and the cloud desktop server.

In S304, after receiving the audio stream, the video stream and the subtitle stream, the cloud terminal may decode the data stream according to a local decoding capability.

Optionally, by way of example, the video stream may be decoded using a Fast Forward Moving Picture Expert Group (FFMPEG). For an Intel chip, the video stream may be decoded using Video Acceleration API (VAAPI) hardware. For an AMD chip, the video stream may be decoded using Video Decode and Presentation API for Unix (VDPAU) hardware. For an ARM chip, the video stream may be decoded using a hardware decoding library provided by a manufacturer or a GStreamer framework. For a Windows system, the cloud terminal may perform hardware decoding using a DirectShow framework. Specific implementations of hardware decoding of the video stream are known to those of ordinary skill in the art, which are not described in detail in this embodiment.

Optionally, in addition to that the cloud terminal receives the data stream, the method further includes steps described below.

Play indication information is received.

A play window is established according to the play indication information.

Optionally, the play indication information is used for indicating a play parameter such as a position and a size of a video play window when the cloud terminal performs video play. Therefore, after receiving a play instruction, the cloud terminal may perform the video play on the video play window with the corresponding position and size on a current local main window according to the play parameter.

It is understandable that the cloud desktop server may transmit the play indication information along with each video frame of a video stream to control in real time the play parameter of the cloud terminal during the video play.

Exemplarily, before the preceding technical solution is implemented, further included is a preprocessing process after the cloud terminal logs in to the cloud desktop server. The process may include steps described below.

A connection is established with the cloud desktop server and a video decoding capability of the cloud terminal is reported to the cloud desktop server.

A main window of a current interface of the cloud desktop server is acquired.

It is to be noted that after the main window of the current interface of the cloud desktop server is acquired, the video play window may be a sub-window of the main window.

This embodiment provides the method for processing a video file applied to the cloud terminal.

In the method, the cloud terminal receives the data stream transmitted by the desktop server, and decodes and plays the data stream according to a local hardware decoding capability, reducing an operating pressure of the cloud desktop server and traffic between the cloud terminal and the cloud desktop server, and being adaptable to different cloud desktop protocols for the video play.

### Embodiment 3

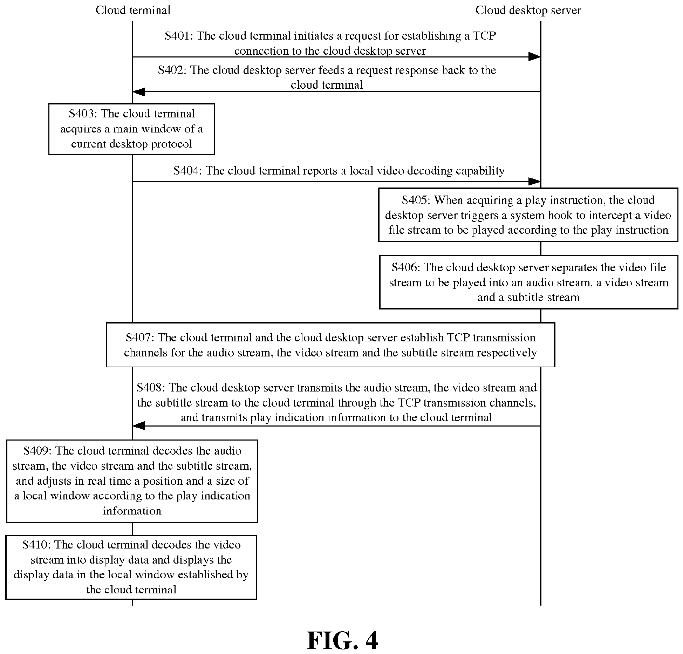

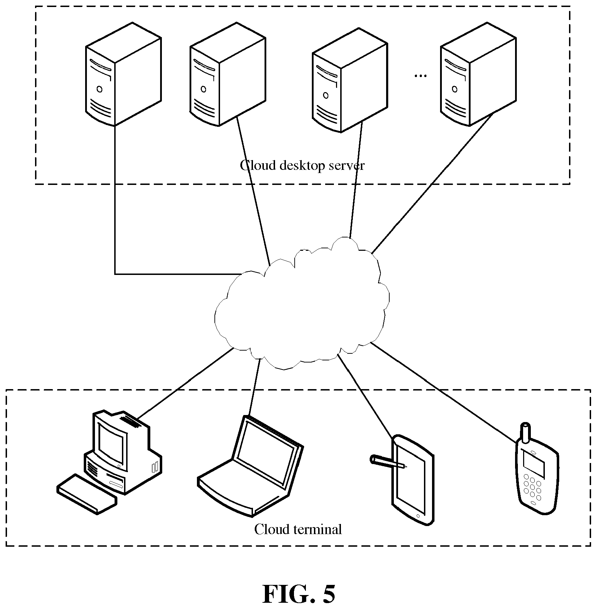

Based on the same technical concept as the preceding embodiments, FIG. 4 shows a detailed flow of a method for processing a video file according to an embodiment of the present invention. The flow is applied to a cloud desktop system shown in FIG. 5. The cloud desktop system includes a cloud desktop server and a cloud terminal. The method may include steps described below.

In S401, the cloud terminal initiates a request for establishing a TCP connection to the cloud desktop server.

It is understandable that a client corresponding to the cloud desktop server may be provided in the cloud terminal so that the cloud terminal interacts with the cloud desktop server through the client, which is not specifically limited in this embodiment.

In S402, the cloud desktop server feeds a request response back to the cloud terminal.

In S403, the cloud terminal acquires a main window of a current desktop protocol.

After the main window of a current interface of the cloud desktop server is acquired, a video play window may be a sub-window of the main window.

In S404, the cloud terminal reports a local video decoding capability.

In S405, when acquiring a play instruction, the cloud desktop server triggers a system hook to intercept a video file stream to be played according to the play instruction.

In S406, the cloud desktop server separates the video file stream to be played into an audio stream, a video stream and a subtitle stream.

In S407, the cloud terminal and the cloud desktop server establish TCP transmission channels for the audio stream, the video stream and the subtitle stream respectively.

Optionally, the cloud desktop server and the cloud terminal establish TCP channels for the audio stream, the video stream and the subtitle stream obtained from the separation; the cloud desktop server notifies the cloud terminal of identifiers such as port numbers of the TCP channels. Therefore, the cloud desktop server may transmit the audio stream, the video stream and the subtitle stream through the established TCP channels; and the cloud terminal may also receive the audio stream, the video stream and the subtitle stream through the corresponding TCP channels according to the identifiers such as the port numbers of the TCP channels.

In S408, the cloud desktop server transmits the audio stream, the video stream and the subtitle stream to the cloud terminal through the TCP transmission channels, and transmits play indication information to the cloud terminal.

It is to be noted that the play indication information is used for indicating a play parameter such as a position and a size of the video play window when the cloud terminal performs video play. It is understandable that the cloud desktop server may transmit the play indication information along with each video frame of a video stream to control in real time the play parameter of the cloud terminal during the video play.

The audio stream, the video stream and the subtitle stream received by the cloud terminal are separated from the video file stream instead of being decoded. Therefore, the audio stream, the video stream and the subtitle stream have less data amount than a video display picture, thereby reducing traffic required for data transmission between the cloud terminal and the cloud desktop server.

In S409, the cloud terminal decodes the audio stream, the video stream and the subtitle stream, and adjusts in real time a position and a size of a local window according to the play indication information.

In S410, the cloud terminal decodes the video stream into display data and displays the display data in the local window established by the cloud terminal.

This embodiment provides the detail flow of the method for processing a video file. In the method, after the video file stream is intercepted by the cloud desktop server, the cloud desktop server separates the video file stream into a data stream according to a data type and transmit the data stream to the cloud terminal, instead of decoding the video file stream so that the cloud terminal decodes and plays the data stream according to a local hardware decoding capability, reducing an operating pressure of the cloud desktop server and traffic between the cloud terminal and the cloud desktop server, and being adaptable to different cloud desktop protocols for the video play.

### Embodiment 4

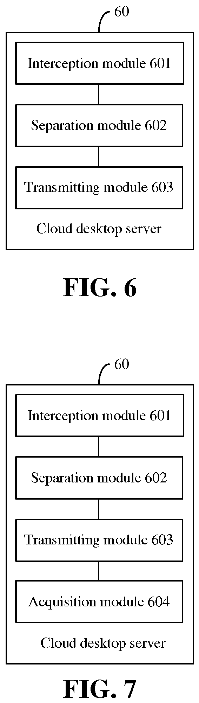

Based on the same technical concept as the preceding embodiments, FIG. 6 shows a cloud desktop server 60 according to an embodiment of the present invention. The cloud desktop server 60 may include an interception module 601, a separation module 602 and a transmitting module 603. The interception module 601 is configured to intercept a video file stream to be played.

The separation module 602 is configured to separate the video file stream according to a data type to obtain a data stream.

The transmitting module 603 is configured to transmit the data stream through a channel corresponding to the data stream.

In the preceding solution, the interception module 601 is configured to intercept the video file stream to be played according to a play instruction when the play instruction is acquired.

In the preceding solution, the separation module 602 is configured to construct a player and separate the video file stream into an audio stream, a video stream and a subtitle stream through the player.

In the preceding solution, the transmitting module 603 is specifically configured to perform operations described below.

A transmission channel corresponding to the audio stream, a transmission channel corresponding to the video stream and a transmission channel corresponding to the subtitle stream are established. An identifier of the transmission channel corresponding to the audio stream, an identifier of the transmission channel corresponding to the video stream and an identifier of the transmission channel corresponding to the subtitle stream are transmitted.

The audio stream is transmitted through the transmission channel corresponding to the audio stream, the video stream is transmitted through the transmission channel corresponding to the video stream and the subtitle stream is transmitted through the transmission channel corresponding to the subtitle stream.

In the preceding solution, the transmitting module 603 is further configured to transmit play indication information. The play indication information is used for indicating a position and a size of a video play window.

In the preceding solution, referring to FIG. 7, the cloud desktop server 60 further includes an acquisition module 604. The acquisition module 604 is configured to acquire a video decoding capability of a cloud terminal.

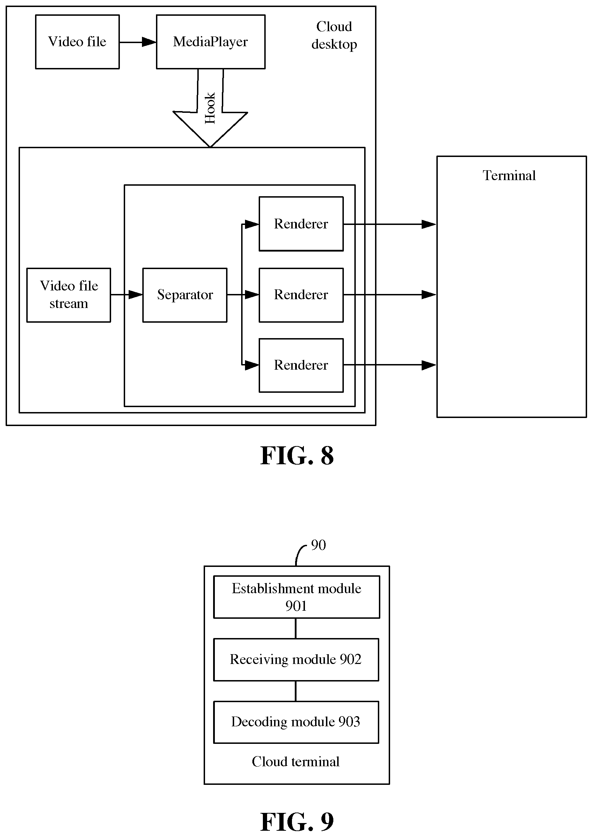

In a specific implementation, referring to FIG. 8, an operating principle of the cloud desktop server shown in FIG. 6 is explained through a specific example. It is set that a user clicks a video file to be played on a cloud desktop, and starts an installed player such as MediaPlayer. In this case, a system hook in the interception module 601 is triggered to enter into a video; the separation module 602 processes the video file stream which has been opened. Specifically, a simple player may be constructed inside the cloud desktop server to replace functions of the separation module 602 and the transmitting module 603. The constructed player mainly includes a separator and a renderer. The separator separates the video file into the audio stream, the video stream and the subtitle stream. The renderer may be modified, and is mainly used for transmitting the audio stream, the video stream and the subtitle stream to the cloud terminal via TCP channels.

### Embodiment 5

Based on the same technical concept as the preceding embodiments, FIG. 9 shows a cloud terminal 90 according to an embodiment of the present invention. The cloud terminal 90 may include an establishment module 901, a receiving module 902 and a decoding module 903.

The establishment module 901 is configured to establish a transmission channel corresponding to a data stream.

The receiving module 902 is configured to receive the data stream through the transmission channel.

The decoding module 903 is configured to decode and play the data stream.

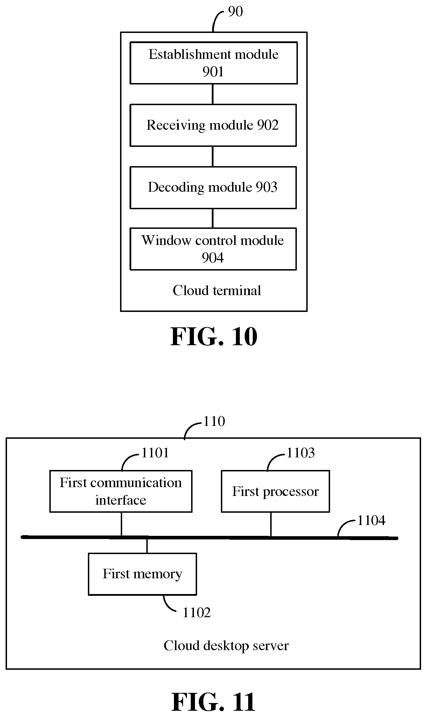

In the preceding solution, referring to FIG. 10, the cloud terminal 90 further includes a window control module 904. The window control module 904 is configured to receive play indication information and establish a play window according to the play indication information.

In the preceding solution, the data stream includes an audio stream, a video stream, and a subtitle stream.

Accordingly, the establishment module 901 is specifically configured to establish a transmission channel for transmitting the audio stream, a transmission channel for transmitting the video stream and a transmission channel for transmitting the subtitle stream.

In the preceding solution, the establishment module 901 is further configured to establish a connection with a cloud desktop server, report a video decoding capability of the cloud terminal to the cloud desktop server, and acquire a main window of a current interface of the cloud desktop server.

In a specific implementation, an operating principle of the cloud desktop server shown in FIG. 9 or FIG. 10 is explained. The establishment module 901 of the cloud terminal receives port numbers of channels for the audio stream, the video stream and the video stream transmitted by the cloud desktop server and establishes TCP links of the channels for the audio stream, the video stream and the video stream respectively with the cloud desktop server. The receiving module 902 receives the audio stream, the video stream and the subtitle stream obtained from separation and transmitted by a cloud desktop through the channels. The decoding module 903 may establish various decoders to decode the received audio stream, video stream and subtitle stream. For example, audio data is decoded for play by local audio equipment, video data is decoded for local display, and subtitle data is decoded for display at a specified position of a video area. For example, the decoding module 903 may decode the video stream according to different systems. The decoding capability of a video card of the cloud terminal may be fully utilized to reduce a usage rate of the CPU of the cloud terminal. This ensures to smoothly play a video, and even a high-definition video such as a 1080P video.

It is to be noted that the window control module 904 may first record the main window of a current cloud desktop and receive the position and size of a video play window transmitted along with each video frame by the cloud desktop server. The window control module 904 may then perform video display in the video play window with an appropriate position and size on the current main window according to the received position and size of the video play window.

### Embodiment 6

Based on the same technical concept as the preceding embodiments, FIG. 11 shows a cloud desktop server 110 according to an embodiment of the present invention. The cloud desktop server 110 may include a first communication interface 1101, a first memory 1102, a first processor 1103 and a first bus 1104.

The first bus 1104 is configured to connect the first communication interface 1101, the first processor 1103 and the first memory 1102 for communication among the first communication interface 1101, the first processor 1103 and the first memory 1102.

The first communication interface 1101 is configured to perform data transmission with an external network element.

The first memory 1102 is configured to store instructions and data.

The first processor 1103 is configured to execute the instructions to perform operations described below.

A video file stream to be played is intercepted.

The video file stream is separated according to a data type to obtain a data stream.

The data stream is transmitted through a channel corresponding to the data stream.

In a practical application, the first memory 1102 may be a volatile memory such as a random-access memory (RAM), a non-volatile memory such as a read-only memory (ROM), a flash memory, a hard disk drive (HDD) or a solid state drive (SSD), or a combination thereof; and the first memory 1102 provides the instructions and the data for the first processor 1103.

The first processor 1103 may be at least one of: an application specific integrated circuit (ASIC), a digital signal processor (DSP), a digital signal processing device (DSPD), a programmable logic device (PLD), a field programmable gate array (FPGA), a central processing unit (CPU), a controller, a microcontroller and a microprocessor. It is understandable that for different equipment, the electronic device for implementing the functions of the preceding processor may be other devices, which is not specifically limited in the embodiments of the present invention. Exemplarily, the first processor 1103 is configured to execute the instructions to intercept the video file to be played according to a play instruction when the play instruction is acquired. Exemplarily, the first processor 1103 is configured to execute the instructions to construct a player and separate the video file stream into an audio stream, a video stream and a subtitle stream through the player.

Optionally, the first communication interface 1101 is configured to perform operations described below.

A transmission channel corresponding to the audio stream, a transmission channel corresponding to the video stream and a transmission channel corresponding to the subtitle stream are established. An identifier of the transmission channel corresponding to the audio stream, an identifier of the transmission channel corresponding to the video stream and an identifier of the transmission channel corresponding to the subtitle stream are transmitted.

The audio stream is transmitted through the transmission channel corresponding to the audio stream, the video stream is transmitted through the transmission channel corresponding to the video stream and the subtitle stream is transmitted through the transmission channel corresponding to the subtitle stream.

Exemplarily, the first communication interface 1101 is further configured to transmit play indication information. The play indication information is used for indicating a position and a size of a video play window.

Exemplarily, the first communication interface 1101 is further configured to acquire a video decoding capability of a cloud terminal.

### Embodiment 7

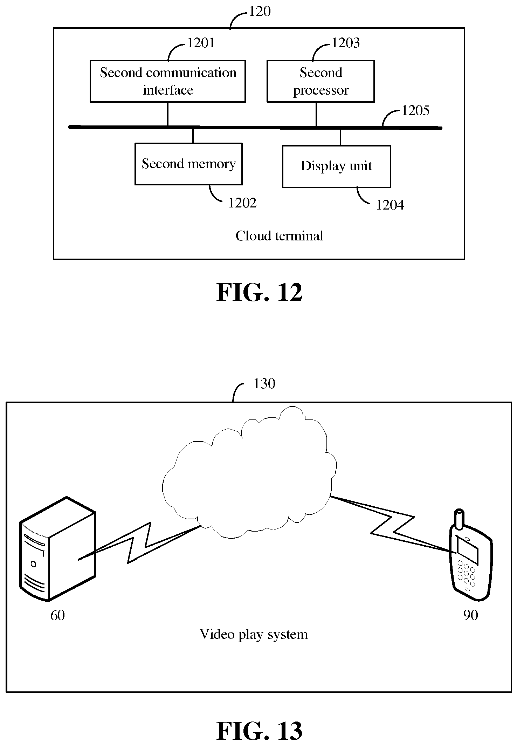

Based on the same technical concept as the preceding embodiments, FIG. 12 shows a cloud terminal 120 according to an embodiment of the present invention. The cloud terminal 120 may include a second communication interface 1201, a second memory 1202, a second processor 1203, a display unit 1204 and a second bus 1205.

The second bus 1205 is configured to connect the second communication interface 1201, the second processor 1203, the display unit 1204 and the second memory 1202 for communication among the second communication interface 1201, the second processor 1203, the display unit 1204 and the second memory 1202.

The second communication interface 1201 is configured to perform data transmission with an external network element.

The second memory 1202 is configured to store instructions and data.

The second processor 1203 is configured to execute the instructions to perform operations described below.

A transmission channel corresponding to a data stream is established.

The data stream is received through the transmission channel.

The data stream is decoded and the display unit 1204 is instructed to play the data stream.

In a practical application, the second memory 1202 may be a volatile memory such as a random-access memory (RAM), a non-volatile memory such as a read-only memory (ROM), a flash memory, a hard disk drive (HDD) or a solid state drive (SSD), or a combination thereof; and the second memory 1202 provides the instructions and the data for the second processor 1203.

The second processor 1203 may be at least one of: an application specific integrated circuit (ASIC), a digital signal processor (DSP), a digital signal processing device (DSPD), a programmable logic device (PLD), a field programmable gate array (FPGA), a central processing unit (CPU), a controller, a microcontroller and a microprocessor. It is understandable that for different equipment, the electronic device for implementing the functions of the preceding processor may be other devices, which is not specifically limited in the embodiments of the present invention.

The display unit 1204 may include at least one of a liquid crystal display (LCD), a thin film transistor LCD (TFT-LCD), an organic light emitting diode (OLED) display, a flexible display, a three-dimensional (3D) display and the like. Some of these displays may be constructed to be transparent to allow a user to view from outside, which may be referred to as a transparent display. A typical transparent display may be, for example, a transparent OLED (TOLED) display or the like.

Exemplarily, the second communication interface 1204 is configured to receive play indication information.

The second processor 1203 is configured to execute the instructions to establish a play window according to the play indication information.

Exemplarily, the data stream includes an audio stream, a video stream, and a subtitle stream. Accordingly, the second processor 1203 is configured to execute the instructions to establish a transmission channel for transmitting the audio stream, a transmission channel for transmitting the video stream and a transmission channel for transmitting the subtitle stream.

Exemplarily, the second communication interface 1201 is further configured to establish a connection with a cloud desktop server, report a video decoding capability of the cloud terminal to the cloud desktop server, and acquire a main window of a current interface of the cloud desktop server.

### Embodiment 8

Based on the same technical concepts as the preceding embodiments, FIG. 13 shows a system 130 for processing a video file according to an embodiment of the present invention. The system 130 includes a cloud desktop server 60 and a cloud terminal 90.

The cloud desktop server 60 is configured to perform operations described below.

A video file stream to be played is intercepted.

The video file stream is separated according to a data type to obtain a data stream.

The data stream is transmitted through a channel corresponding to the data stream.

The cloud terminal 90 is configured to perform operations described below.

A transmission channel corresponding to the data stream is established.

The data stream is received through the transmission channel.

The data stream is decoded and played.

This embodiment provides a structure of the system 130 for processing a video file. After the video file stream is intercepted by the cloud desktop server 60, the cloud desktop server 60 separates the video file stream into the data stream according to the data type and transmits the data stream to the cloud terminal 90, instead of decoding the video file stream so that the cloud terminal 90 decodes and plays the data stream according to a local hardware decoding capability, reducing an operating pressure of the cloud desktop server 60 and traffic between the cloud terminal 90 and the cloud desktop server 60, and being adaptable to different cloud desktop protocols for video play.

An embodiment of the present invention further provides a processor. The processor is configured to execute programs which, when executed, execute the steps of any method described above.

It should be understood by those skilled in the art that the embodiments of the present invention may be provided as methods, systems, or computer program products. Therefore, the present invention may adopt a form of a hardware embodiment, a software embodiment, or a combination of hardware and software embodiments. In addition, the present invention may adopt a form of a computer program product implemented on one or more computer-usable storage media (including, but not limited to, a disk memory, an optical memory, and the like) which include computer-usable program codes.

The present invention is described with reference to flowcharts and/or block diagrams of methods, equipment (systems) and computer program products according to the embodiments of the present invention. It should be understood that each flow and/or block in the flowcharts and/or block diagrams and a combination of flows and/or blocks in the flowcharts and/or block diagrams are implemented by computer program instructions. These computer program instructions can be provided to a general-purpose computer, a special-purpose computer, an embedded processor or a processor of other programmable data processing equipment to produce a machine so that instructions executed by a computer or the processor of other programmable data processing equipment produce a means for implementing functions specified in one or more flows in the flowcharts and/or one or more blocks in the block diagrams.

These computer program instructions can also be stored in a computer-readable memory which can direct the computer or other programmable data processing equipment to operate in a particular manner so that the instructions stored in the computer-readable memory produce a manufactured product including an instruction means. The instruction means implements the functions specified in one or more flows in the flowcharts and/or one or more blocks in the block diagrams.

These computer program instructions can also be loaded onto the computer or other programmable data processing equipment so that a series of operation steps are performed on the computer or other programmable equipment to produce processing implemented by the computer. Therefore, instructions executed on the computer or other programmable equipment provide steps for implementing the functions specified in one or more flows in the flowcharts and/or one or more blocks in the block diagrams.

The above are only preferred embodiments of the present invention and are not intended to limit the scope of the present invention.

### INDUSTRIAL APPLICABILITY

As described above, the method, device and system for processing a video file provided by the embodiments of the present invention have the following beneficial effects: an operating pressure of a server is reduced, traffic between a terminal and the server is reduced, and the method, device and system are adaptable to different cloud desktop protocols for video play.

## Claims

1. A method for processing a video file, applied to a cloud desktop server, comprising:
intercepting a video file stream to be played;
separating, according to a data type, the video file stream to obtain a data stream; and
transmitting the data stream through a channel corresponding to the data stream.

2. The method of claim 1, wherein intercepting the video file stream to be played comprises:
when a play instruction is acquired, intercepting the video file to be played according to the play instruction.

3. The method of claim 1, wherein separating, according to the data type, the video file stream to obtain the data stream comprises:
constructing a player; and
separating the video file stream into an audio stream, a video stream and a subtitle stream through the player.

4. The method of claim 3, wherein transmitting the data stream through the channel corresponding to the data stream comprises:
establishing a transmission channel corresponding to the audio stream, a transmission channel corresponding to the video stream and a transmission channel corresponding to the subtitle stream;
transmitting an identifier of the transmission channel corresponding to the audio stream, an identifier of the transmission channel corresponding to the video stream and an identifier of the transmission channel corresponding to the subtitle stream; and
transmitting the audio stream through the transmission channel corresponding to the audio stream, the video stream through the transmission channel corresponding to the video stream and the subtitle stream through the transmission channel corresponding to the subtitle stream.

5. The method of claim 1, further comprising:
transmitting play indication information, wherein the play indication information is used for indicating a position and a size of a video play window.

6. The method of claim 1, wherein before intercepting the video file stream to be played, the method further comprises:
acquiring a video decoding capability of a cloud terminal.

7. A method for processing a video file, applied to a cloud terminal, comprising:
establishing a transmission channel corresponding to a data stream;
receiving the data stream through the transmission channel; and
decoding and playing the data stream.

8. The method of claim 7, further comprising:
receiving play indication information; and
establishing a play window according to the play indication information.

9. The method of claim 7, wherein the data stream comprises an audio stream, a video stream and a subtitle stream;
wherein accordingly, establishing the transmission channel corresponding to the data stream comprises:
establishing a transmission channel for transmitting the audio stream, a transmission channel for transmitting the video stream and a transmission channel for transmitting the subtitle stream.

10. The method of claim 7, wherein before establishing the transmission channel corresponding to the data stream, the method further comprises:
establishing a connection with a cloud desktop server and reporting a video decoding capability of the cloud terminal to the cloud desktop server; and
acquiring a main window of a current interface of the cloud desktop server.

11. A cloud desktop server, comprising: a first communication interface, a first memory, a first processor and a first bus;
wherein the first bus is configured to connect the first communication interface, the first processor and the first memory for communication among the first communication interface, the first processor and the first memory;
the first communication interface is configured to perform data transmission with an external network element;
the first memory is configured to store instructions and data; and
the first processor is configured to execute the instructions to:
intercept a video file stream to be played;
separate, according to a data type, the video file stream to obtain a data stream; and
transmit the data stream through a channel corresponding to the data stream.

12. The cloud desktop server of claim 11, wherein the first processor is configured to execute the instructions to intercept the video file to be played according to a play instruction when the play instruction is acquired.

13. The cloud desktop server of claim 11, wherein the first processor is configured to execute the instructions to:
construct a player; and
separate the video file stream into an audio stream, a video stream and a subtitle stream through the player.

14. The cloud desktop server of claim 13, wherein the first communication interface is configured to:
establish a transmission channel corresponding to the audio stream, a transmission channel corresponding to the video stream and a transmission channel corresponding to the subtitle stream;
transmit an identifier of the transmission channel corresponding to the audio stream, an identifier of the transmission channel corresponding to the video stream and an identifier of the transmission channel corresponding to the subtitle stream; and
transmit the audio stream through the transmission channel corresponding to the audio stream, the video stream through the transmission channel corresponding to the video stream and the subtitle stream through the transmission channel corresponding to the subtitle stream.

15. The cloud desktop server of claim 11, wherein the first communication interface is further configured to transmit play indication information, wherein the play indication information is used for indicating a position and a size of a video play window.

16. The cloud desktop server of claim 11, wherein the first communication interface is further configured to acquire a video decoding capability of a cloud terminal.

17. A cloud terminal, comprising: a second communication interface, a second memory, a second processor, a display unit and a second bus;
wherein the second bus is configured to connect the second communication interface, the second processor, the display unit and the second memory for communication among the second communication interface, the second processor, the display unit and the second memory;
the second communication interface is configured to perform data transmission with an external network element;
the second memory is configured to store instructions and data; and
the second processor is configured to execute the instructions to:
establish a transmission channel corresponding to a data stream;
receive the data stream through the transmission channel; and
decode the data stream and instruct a second display unit to play the data stream.

18. The cloud terminal of claim 17, wherein
the second communication interface is configured to receive play indication information; and
the second processor is configured to execute the instructions to establish a play window according to the play indication information.

19. The cloud terminal of claim 17, wherein the data stream comprises an audio stream, a video stream and a subtitle stream;
wherein accordingly, the second processor is configured to execute the instructions to establish a transmission channel for transmitting the audio stream, a transmission channel for transmitting the video stream and a transmission channel for transmitting the subtitle stream.

20. The cloud desktop server of claim 17, wherein the second communication interface is further configured to:
establish a connection with a cloud desktop server and report a video decoding capability of the cloud terminal to the cloud desktop server; and
acquire a main window of a current interface of the cloud desktop server.

21. A system for processing a video file, comprising: a cloud desktop server and a cloud terminal; wherein the cloud desktop server is configured to:
intercept a video file stream to be played;
separate, according to a data type, the video file stream to obtain a data stream; and
transmit the data stream through a channel corresponding to the data stream;
wherein the cloud terminal is configured to:
establish a transmission channel corresponding to the data stream;
receive the data stream through the transmission channel; and
decode and play the data stream.

22. A storage medium, comprising stored programs, which, when executed, execute the method of any one of claims 1 to 10.
